# FASCICULE DE BREVET EUROPEEN

(11) **EP 3 927 654 B1**
(45) Date de publication et mention de la délivrance du brevet: **07.12.2022**
(21) Numéro de dépôt: 20704904.0
(22) Date de dépôt: 19.02.2020
(51) Int. Cl.: C01B 3/16, C01B 3/48, B01J 8/02, B01J 8/04

(54) **DISPOSITIF INTÉGRÉ POUR RÉALISER UNE RÉACTION DU GAZ À L'EAU ET UNE OXYDATION CATALYTIQUE, INSTALLATION INTÉGRANT UN TEL DISPOSITIF ET PLATEFORME NAVALE INTÉGRANT UNE TELLE INSTALLATION**
INTEGRIERTE VORRICHTUNG ZUR DURCHFÜHRUNG EINER WASSERGASREAKTION UND KATALYTISCHE OXIDATION, SYSTEM MIT SOLCH EINER VORRICHTUNG UND MARINEPLATTFORM MIT SOLCH EINEM SYSTEM
INTEGRATED DEVICE FOR CARRYING OUT A WATER GAS REACTION AND CATALYTIC OXIDATION, SYSTEM INCORPORATING SUCH A DEVICE AND NAVAL PLATFORM INCORPORATING SUCH A SYSTEM

(30) Priorité: 21.02.2019 FR 1901739
(43) Date de publication de la demande: 29.12.2021
(73) Titulaire: Naval Group, 75015 Paris (FR)
(72) Inventeur: BOULAIRE, François-Xavier, 44620 LA MONTAGNE (FR); BOUHIER, Aurélien, 44620 LA MONTAGNE (FR); GUIHENEUF, Nicolas, 44620 LA MONTAGNE (FR)
(74) Mandataire: Lavoix
(86) Numéro de dépôt international: PCT/EP2020/054349
(87) Numéro de publication internationale: WO 2020/169663

(56) Documents cités:
- EP-A1- 0 922 666
- WO-A1-2017/032944
- WO-A2-99/61397
- CN-A- 107 352 509
- US-B1- 7 488 359

## Description

La présente invention concerne un dispositif comprenant :
- une enceinte définissant un volume intérieur et configurée pour contenir un mélange d'eau et de vapeur,
- une première entrée apte et destinée à admettre de l'eau dans le volume intérieur , et une première sortie apte et destinée à faire sortir de la vapeur du volume intérieur,
- une deuxième entrée apte et destinée à recevoir un gaz de synthèse, et une deuxième sortie apte et destinée à faire sortir un gaz de synthèse modifié ,
- un premier échangeur-réacteur situé dans le volume intérieur, connecté fluidiquement à la deuxième entrée et à la deuxième sortie, et adapté pour réaliser une réaction du gaz à l'eau (en anglais : *water-gas shift reaction*) sur le gaz de synthèse et obtenir le gaz de synthèse modifié, et pour chauffer l'eau admise dans le volume intérieur et produire au moins une partie de ladite vapeur,
- une troisième entrée apte et destinée à revoir un gaz combustible distinct du gaz de synthèse, une quatrième entrée apte et destinée à recevoir un gaz comburant comportant au moins 20% en volume d'oxygène, et une troisième sortie apte et destinée à faire sortir des gaz convertis, et
- un deuxième échangeur-réacteur connecté fluidiquement à la troisième entrée, à la quatrième entrée et à la troisième sortie, le deuxième échangeur-réacteur étant adapté pour réaliser une oxydation catalytique du gaz combustible par le gaz comburant et obtenir les gaz convertis L'invention concerne également une installation comportant un tel dispositif, et une plateforme navale, telle qu'un engin sous-marin, intégrant une telle installation.

Il est connu, notamment dans le domaine des engins sous-marins, de mettre en oeuvre une installation de production d'hydrogène et de vapeur comportant un réformeur de gasoil en présence d'oxygène et de vapeur pour obtenir un gaz de synthèse. Le gaz de synthèse subit une réaction du gaz à l'eau (en anglais « *water-gas shift reaction »*) dans un premier dispositif pour produire un gaz de synthèse modifié, plus riche en hydrogène. Ce gaz de synthèse plus riche est ensuite envoyé dans un purificateur qui sépare le gaz de synthèse modifié en un mélange enrichi en hydrogène, qui constitue l'hydrogène produit, et un mélange appauvri en hydrogène, qui constitue un gaz combustible envoyé dans un second dispositif réalisant une oxydation catalytique du gaz combustible en présence d'oxygène.

Le second dispositif transfère la chaleur dégagée par l'oxydation catalytique à de l'eau pour produire un mélange d'eau et de vapeur qui est envoyé au premier dispositif. Dans le premier dispositif, le mélange d'eau et de vapeur reçoit de la chaleur dégagée par la réaction de « *shift»* très exothermique et se transforme en vapeur. Cette vapeur est envoyée au réformeur.

Une telle installation donne satisfaction du point de vue de la production d'hydrogène, mais présente un certain coût.

Un but de l'invention est de fournir un dispositif du type décrit ci-dessus, présentant notamment un coût réduit.

A cet effet, l'invention concerne un dispositif selon la revendication 1.

Selon des modes particuliers de réalisation, le dispositif comprend l'une ou plusieurs des caractéristiques correspondant aux revendications 2 à 8, prise(s) isolément ou selon toutes les combinaisons techniquement possibles.

L'invention concerne aussi une installation selon la revendication 9.

L'invention concerne enfin une plateforme navale selon la revendication 10.

L'invention sera mieux comprise à la lecture de la description qui va suivre, donnée uniquement à titre d'exemple et faite en se référant aux dessins annexés, sur lesquels :
[Fig 1] la figure 1 est une vue schématique d'une plateforme navale selon l'invention,
[Fig 2] la figure 2 est une vue schématique d'un dispositif selon l'invention représenté sur la figure 1, en coupe selon un plan passant par l'axe central du dispositif,
[Fig 3] la figure 3 est une vue analogue à la figure 2, mais d'un dispositif selon l'invention constituant une première variante du dispositif représenté sur les figures 1 et 2, et
[Fig 4] la figure 4 est une vue analogue aux figures 2 et 3, mais représentant un dispositif selon l'invention constituant une deuxième variante du dispositif représenté sur les figures 1 et 2.

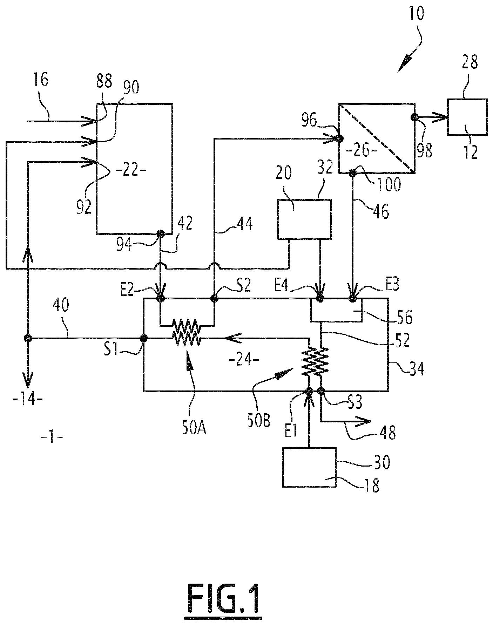

En référence à la figure 1, on décrit une plateforme navale 1 selon l'invention.

La plateforme navale 1 est par exemple un engin sous-marin, habité ou non.

En variante, la plateforme navale est par exemple un bâtiment de surface.

La plateforme navale comprend une installation 10 pour produire un gaz 12 comprenant au moins 90% d'hydrogène en volume, et avantageusement de la vapeur 14 à partir d'un mélange d'hydrocarbures 16, d'eau 18 et d'un gaz comburant 20 comportant au moins 20% en volume d'oxygène.

Le gaz 12 est avantageusement de l'hydrogène pur à au moins 95% en volume, et destiné à un usage local dans la plateforme navale, par exemple dans des piles à combustible.

Le mélange d'hydrocarbures 16 est par exemple du gasoil.

Le gaz comburant 20 est par exemple de l'oxygène de pureté cryogénique, c'est-à-dire pur à au moins 99,9% en volume.

Selon une variante, le gaz comburant 20 est de l'air.

La vapeur 14 est par exemple également destinée à un usage local dans la plateforme navale.

L'installation 10 comprend un réformeur 22, un dispositif 24 capable de réaliser de manière intégrée une réaction dite « du gaz à l'eau » (en anglais : *water-gas shift reaction*) et une oxydation catalytique, et un purificateur 26. L'installation 10 comprend aussi un réservoir 28 adapté pour recevoir le gaz 12 produit, un réservoir 30 adapté pour fournir l'eau 18, et un réservoir 32 adapté pour fournir le gaz comburant 20.

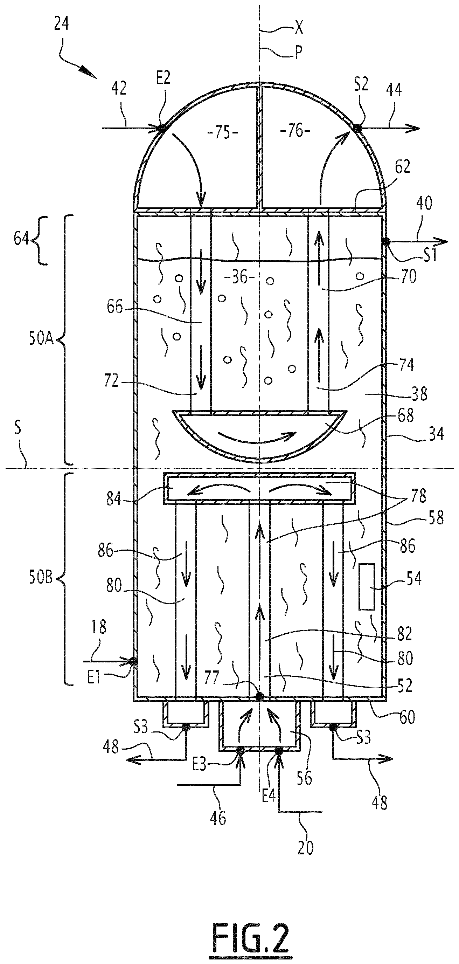

Le dispositif 24 comprend une enceinte 34 définissant un volume intérieur 36 et configurée pour contenir un mélange d'eau et de vapeur 38 (figure 2). Le dispositif 24 comprend une première entrée E1 connectée au réservoir 30 pour admettre l'eau 18 dans le volume intérieur 36, et une première sortie S1 pour faire sortir de la vapeur 40 du volume intérieur 36.

Le dispositif 24 comprend une deuxième entrée E2 pour recevoir un gaz de synthèse 42 en provenance du réformeur 22, et une deuxième sortie S2 pour faire sortir un gaz de synthèse modifié 44 en direction du purificateur 26.

Le dispositif 24 comprend une troisième entrée E3 pour recevoir un gaz combustible 46 distinct du gaz de synthèse 44 et provenant du purificateur 26. Le dispositif 24 comprend aussi une quatrième entrée E4 pour recevoir le gaz comburant 20 en provenance du réservoir 32, et une troisième sortie S3 pour évacuer des gaz convertis 48 qui sont les produits de réaction de l'oxydation catalytique.

Le dispositif 24 comprend un premier échangeur-réacteur 50A adapté pour réaliser la réaction du gaz à l'eau (réaction de *shift*) sur le gaz de synthèse 42, obtenir le gaz de synthèse modifié 44 et pour chauffer l'eau 18 admise dans le volume intérieur 36 et produire au moins une partie de la vapeur 40.

Le dispositif 24 comprend un deuxième échangeur-réacteur 50B situé dans le volume intérieur 36 et adapté pour réaliser l'oxydation catalytique du gaz combustible 46 par le gaz comburant 20, pour obtenir les gaz convertis 48 et pour chauffer l'eau 18 et produire au moins une partie de la vapeur 40.

Optionnellement, le dispositif 24 comprend au moins un système de chauffage 54 électrique (figure 2) situé dans le volume intérieur 36 et adapté pour produire la vapeur 40 au démarrage de l'installation 10. Toujours optionnellement, le dispositif comprend un mélangeur 56 configuré pour mélanger le gaz combustible 46 et le gaz comburant 20 pour produire un mélange 52 au sein duquel l'oxydation catalytique est réalisée.

L'enceinte 34 présente par exemple une forme générale de révolution autour d'un axe central X. De même, le dispositif 24 dans son entier présente avantageusement une forme générale sensiblement de révolution autour de l'axe central si l'on excepte certaines entrées-sorties.

L'enceinte 34 est par exemple adaptée pour résister à une pression interne supérieure à 10 bars relatifs (c'est-à-dire par rapport à la pression régnant à l'extérieur de l'enceinte 34) et pouvant aller par exemple jusqu'à 100 bars relatifs.

L'enceinte 34 comprend par exemple une paroi latérale 58 cylindrique autour de l'axe central X, et deux fonds 60, 62 fermant axialement le volume intérieur 36.

Sur la figure 2, les fonds 60, 62 sont représentés perpendiculaires à l'axe central X. Ces fonds peuvent être bombés pour mieux résister à la pression.

L'axe central X est par exemple sensiblement vertical.

Selon des variantes non représentées, l'axe central présente d'autres orientations, notamment une orientation sensiblement horizontale.

La première entrée E1 pour l'eau 18 est avantageusement située en bas de l'enceinte 34, et la première sortie S1 pour la vapeur 40 avantageusement située en haut de l'enceinte, dans une zone 64 de séparation entre l'eau et la vapeur dans le volume intérieur 36.

Le premier échangeur-réacteur 50A est par exemple situé d'un côté d'un plan de séparation S perpendiculaire à l'axe X, tandis que le deuxième échangeur-réacteur 50B est situé de l'autre côté du plan de séparation. Dans l'exemple représenté sur la figure 2, le premier échangeur-réacteur 50A est situé au-dessus du deuxième échangeur-réacteur 50B.

Le premier échangeur-réacteur 50A comprend un réacteur-échangeur amont 66 connecté fluidiquement à la deuxième entrée E2 pour recevoir le gaz de synthèse 42 et adapté pour réaliser la réaction de *shift.* Le premier échangeur-réacteur 50A comprend une boîte 68 de retour des gaz connectée fluidiquement en amont au réacteur-échangeur amont. Le premier échangeur-réacteur 50A comprend un élément aval 70 connecté fluidiquement en amont à la boîte 68 et en aval à la deuxième sortie S2.

Le réacteur-échangeur amont 66 et la deuxième entrée E2 sont par exemple situés du côté d'un plan médian P passant par l'axe central X, et la deuxième sortie S2 et l'élément aval 70 sont par exemple situés de l'autre côté du plan médian.

Le réacteur-échangeur amont 66 comprend, de manière connue en soi, un catalyseur adapté pour favoriser la réaction de *shift.* Le réacteur-échangeur amont 66 est en outre configuré pour permettre un transfert de la chaleur générée par la réaction de *shift* vers le mélange d'eau et de vapeur 38. Par exemple, le réacteur-échangeur amont 66 comprend une pluralité de canalisations 72 (dont une seule est schématisée sur la figure 2), avantageusement des tubes, par exemple sensiblement parallèles à l'axe central X.

Les canalisations 72 sont par exemple disposées suivant une géométrie hémicylindrique autour de l'axe central X. Les canalisations 72 sont par exemple réparties en un ou plusieurs groupes situés respectivement à une distance donnée de l'axe central X, les canalisations 72 de chacun des groupes étant réparties angulairement autour de l'axe central X, avantageusement régulièrement.

Chacune des canalisations 72 est adaptée pour recevoir une fraction du gaz de synthèse 42, depuis un collecteur 75 formant la deuxième entrée E2 et situé au-dessus de l'enceinte 34, et pour délivrer les produits de la réaction de *shift à* la boîte 68.

L'élément aval 70 est par exemple un réacteur-échangeur analogue au réacteur-échangeur amont 66. L'élément aval 70 est alors adapté pour poursuivre la réaction de *shift* sur les gaz reçus de la boîte 68, et pour céder de la chaleur au mélange d'eau et de vapeur 38.

L'élément aval 70 comprend par exemple une pluralité de canalisations 74 (dont une seule est représentée sur la figure 2), par exemple des tubes.

Selon une variante, l'élément aval 70 n'est pas un réacteur-échangeur, mais simplement un échangeur de chaleur adapté pour céder de la chaleur au mélange d'eau et de vapeur 38.

Les canalisations 74 sont avantageusement disposées symétriquement aux canalisations 72 par rapport à l'axe central X et sont adaptées pour délivrer le gaz de synthèse modifié 44 dans un collecteur 76 formant la deuxième sortie S2 et situé au-dessus de l'enceinte 34 dans l'exemple représenté.

Les collecteurs 75, 76 sont par exemple symétriques l'un de l'autre par rapport au plan médian P.

Le collecteur 75 est adapté pour distribuer le gaz de synthèse 42 dans chacune des canalisations 72 de l'échangeur amont 68.

Le collecteur 76 est adapté pour récupérer le gaz de synthèse modifié 44 en provenance de chacune des canalisations 74 de l'élément aval 70.

Le deuxième échangeur-réacteur 50B comprend un réacteur 78 configuré pour réaliser l'oxydation catalytique, et un échangeur 80 connecté fluidiquement en amont au réacteur 78 et en aval à la troisième sortie S3.

Le mélangeur 56 forme la troisième entrée E3 et la quatrième entrée E4, et comporte une sortie 77 pour le mélange 52 du gaz combustible 46 et du gaz comburant 20.

Le réacteur 78 comprend par exemple au moins un brûleur catalytique 82, et une boîte 84 d'aller-retour des gaz convertis adaptée pour recevoir les gaz convertis 48 en provenance du brûleur catalytique dans un sens selon l'axe central X (vers le haut dans l'exemple représenté) et pour les envoyer à l'échangeur 80 en sens contraire selon l'axe central.

Le brûleur catalytique 82 est connecté fluidiquement à la sortie 77 du mélangeur 56 pour recevoir le mélange 52, et à la boîte 84 d'aller-retour des gaz convertis. Le brûleur catalytique 82 présente par exemple un aspect tubulaire et s'étend avantageusement parallèlement à l'axe central X. Dans l'exemple représenté, le brûleur catalytique 82 est centré sur l'axe central.

Selon une variante non-représentée, le brûleur catalytique 82 comporte plusieurs canalisations tubulaires.

L'échangeur 80 comprend par exemple une pluralité de canalisations 86 (dont seulement deux sont représentées sur la figure 2), formant avantageusement des serpentins autour de l'axe central X.

Les canalisations 86 entourent avantageusement le brûleur catalytique 82 autour de l'axe central X.

Selon une variante non-représentée, les canalisations 86 comprennent des tubes parallèles à l'axe central X.

La sortie S3 présente par exemple une forme circulaire autour de l'axe central X et est adaptée pour collecter les gaz convertis 48 en provenance de chacune des canalisations 86 de l'échangeur 80.

Le réformeur 22 (figure 1) comprend une entrée 88 pour le mélange d'hydrocarbures 16, une entrée 90 connectée fluidiquement au réservoir 32 pour recevoir du gaz comburant 20, une entrée 92 connectée fluidiquement à la première sortie S1 du dispositif 24 pour recevoir au moins une partie de la vapeur 40 produite, et une sortie 94 connectée fluidiquement à la deuxième entrée E2 du dispositif 24.

Le réformeur 22 est par exemple de type auto thermique (ATR).

Le purificateur 26 comprend une entrée 96 connectée fluidiquement à la deuxième sortie S2 du dispositif 24, une sortie 98 pour le gaz 12 riche en hydrogène, et une sortie 100 pour envoyer le gaz combustible 46 vers la troisième entrée E3 du dispositif 24.

Le purificateur 26 comprend par exemple des membranes semi-perméables (non représentées) ou un système à adsorption par inversion de pression (en anglais PSA ou *Pressure Swing Adsorption).*

Le fonctionnement de l'installation 10 se déduit de sa structure et va maintenant être décrit brièvement.

Au sein de la plateforme navale 1, l'installation 10 produit le gaz 12 riche en hydrogène, par exemple stocké dans le réservoir 28, et éventuellement de la vapeur 14 excédentaire. Le gaz 12 et la vapeur 14 sont utilisés localement dans la plateforme navale.

A partir du mélange d'hydrocarbures 16, du gaz comburant 20 riche en oxygène, et d'au moins une partie de la vapeur 40, le réformeur 22 produit le gaz de synthèse 42.

Le gaz de synthèse 42 entre dans le dispositif 24 par la deuxième entrée E2 et arrive dans le collecteur 75. Le collecteur 75 répartit le gaz de synthèse 42 dans la pluralité de canalisations 72 du réacteur-échangeur amont 66, dans lesquelles la réaction du gaz à l'eau (*shift*) se produit. Celle-ci transforme le monoxyde de carbone présent dans le gaz de synthèse 42 en dioxyde de carbone et produit de l'hydrogène.

En outre, la réaction de *shift* est exothermique, donc de la chaleur est cédée au mélange d'eau et de vapeur 38 depuis le réacteur-échangeur amont 66.

La boîte 68 collecte les produits de la réaction et les envoient en sens axialement contraire dans les canalisations 74 de l'élément aval 70, dans lequel la réaction de *shift* se poursuit, avec cession de chaleur au mélange d'eau et de vapeur 38. Le résultat de la réaction est le gaz de synthèse modifié 44, qui est enrichi en hydrogène par rapport au gaz de synthèse 42.

Le gaz de synthèse modifié 44 sort ensuite des canalisations 74 et arrive dans le collecteur 76. Le gaz de synthèse modifié 44 sort du dispositif 24 par la deuxième sortie S2 et entre dans le purificateur 26 par l'entrée 96.

Dans le purificateur 26, le gaz de synthèse modifié 44 est séparé en un gaz enrichi en hydrogène, i.e. le gaz 12, et en un gaz appauvri en hydrogène, i.e. le gaz combustible 46. Le gaz combustible 46 contient en proportion assez peu de composants combustibles, c'est pourquoi une oxydation catalytique est mise en œuvre.

Le gaz combustible 46 sort du purificateur 26 par la sortie 100 et entre dans le dispositif 24 par la troisième entrée E3.

Le gaz comburant 20 provenant du réservoir 32 entre dans le dispositif 24 par la quatrième entrée E4. Le gaz combustible 46 et le gaz comburant 20 sont mélangés dans le mélangeur 56 pour former le mélange 52.

Le mélange 52 sort du mélangeur 56 par la sortie 77 et entre dans le brûleur catalytique 82, dans lequel il subit une oxydation catalytique qui produit un dégagement de chaleur. Une partie de cette chaleur passe depuis le brûleur catalytique 82 dans le mélange d'eau et de vapeur 38.

Les gaz convertis 48, produits par l'oxydation catalytique, entrent dans la boîte 84 d'aller-retour des gaz convertis dans un sens montant selon l'axe central X, puis en sortent en sens opposé selon l'axe central, c'est-à-dire ici un sens descendant. La boîte 84 a aussi pour rôle de répartir les gaz convertis 48 dans les canalisations 86 de l'échangeur 80. Les gaz convertis 48 sortent du dispositif 24 par la troisième sortie S3 qui agit comme un collecteur. Les gaz convertis 48 sont ensuite rejetés ou stockés.

L'eau 18 sort du réservoir 30 et entre dans le dispositif 24 par la première entrée E1 et pénètre dans le volume intérieur 36 dans lequel elle reçoit de la chaleur et forme le mélange d'eau et de vapeur 38. La vapeur 40 se sépare de l'eau dans la zone de séparation 64 et sort du dispositif 24 par la première sortie S1.

Une partie de la vapeur 40 est alors dirigée par l'entrée 92 du réformeur 22.

Au démarrage de l'installation 10, le système de chauffage 54 permet de chauffer l'eau 18 qui arrive dans le volume intérieur 36 et de produire la vapeur 40 pour le fonctionnement du réformeur 22. En l'absence du système de chauffage électrique, une autre source de vapeur est utilisée pour le démarrage.

Grâce aux caractéristiques décrites ci-dessus, le dispositif 24 assure les fonctions de *shift* et d'oxydation catalytique dans une enceinte sous pression unique. Le dispositif 24 est donc plus compact et moins cher que les dispositifs existants.

En outre, la forme tubulaire du brûleur 82 permet un remplacement aisé du catalyseur.

D'une manière générale, le nombre et la longueur des tuyauteries est réduit, ce qui limite les risques de fuites.

Son encombrement réduit et les risques limités de fuite rendent l'installation 10 particulièrement avantageuse dans un engin sous-marin.

En outre, les dissipations thermiques sont diminuées du fait de la compacité du dispositif 24 et de la suppression de certaines canalisations.

La suppression de la circulation d'un mélange diphasique eau-vapeur dans des canalisations réduit également les pertes de charge, et donc les pertes d'énergie.

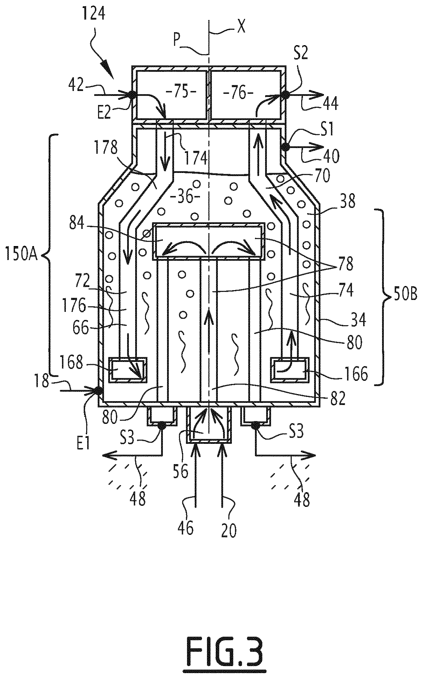

En référence à la figure 3, on va maintenant décrire un dispositif 124 constituant une première variante du dispositif 24.

Le dispositif 124 est analogue au dispositif 24 représenté sur les figures 1 et 2. Les éléments identiques portent les mêmes références numériques et ne seront pas décrits à nouveau. Seules les différences seront décrites en détail ci-après.

Le dispositif 124 comprend un premier échangeur-réacteur 150A qui diffère structurellement du premier échangeur-réacteur 50A représenté sur la figure 2. En effet, le premier échangeur-réacteur 150A présente une extension axiale plus grande. Il comporte une boîte 168 de renvoi des gaz située axialement entre la troisième sortie S3 pour les gaz convertis 48 et la boîte 84 d'aller-retour des gaz convertis.

Dans l'exemple représenté sur la figure 3, la boîte 168 est située en bas du volume intérieur 36. La boîte 168 présente par exemple une forme générale torique qui entoure le premier échangeur-réacteur 50B autour de l'axe central X.

Les canalisations 72 du réacteur-échangeur amont 66 comprennent avantageusement une portion amont 174 orientée axialement, et une portion aval 176 également orientée axialement et située à une plus grande distance de l'axe central X que la portion amont. Les canalisations 72 comportent aussi une portion de raccordement 178 située entre la portion amont 174 et la portion aval 176.

Selon une variante non représentée, les canalisations 72 sont rectilignes, de préférence parallèles à l'axe central X.

La portion de raccordement 178 rejoint la portion aval 176 axialement au niveau de la boîte 84 d'aller-retour des gaz convertis.

Ainsi, dans la première variante, les deux échangeurs-réacteurs 150A, 50B n'occupent pas des zones axialement séparées du volume intérieur 36, mais le premier échangeur-réacteur 150A entoure le deuxième échangeur-réacteur 50B autour de l'axe central X.

Grâce à ces caractéristiques, le dispositif 124 est plus compact que le dispositif 24, au moins dans le sens axial.

Le dispositif 124 permet un meilleur échange thermique entre les échangeurs-réacteurs 150A et 50B et le mélange d'eau et de vapeur 38.

En outre, le risque d'interaction mécanique (par contact) entre les échangeurs-réacteurs 150A et 50B en raison de leur dilatation thermique est réduit.

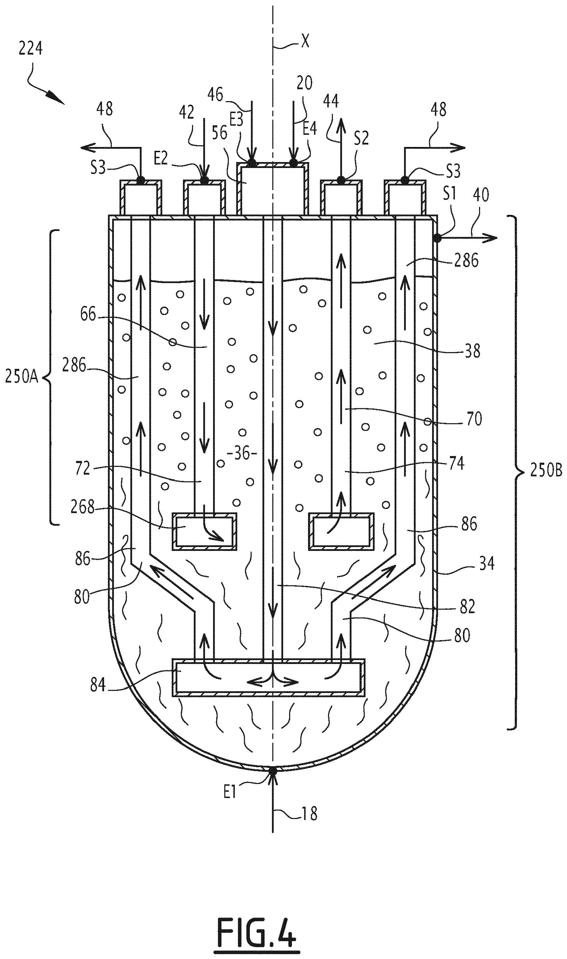

En référence à la figure 4, on décrit un dispositif 224 constituant une deuxième variante du dispositif 24.

Le dispositif 224 est analogue au dispositif 24 représenté sur les figures 1 et 2. Les éléments identiques portent les mêmes références numériques et ne seront pas décrits à nouveau. Seules les différences seront décrites en détail ci-après.

Le dispositif 224 comporte un deuxième échangeur-réacteur 250B dont le sens est inversé axialement par rapport au deuxième échangeur-réacteur 50B du dispositif 24, et qui possède une extension axiale également plus grande. Dans l'exemple représenté, le deuxième échangeur-réacteur 250B s'étend axialement sur presque toute la hauteur du volume intérieur 36.

La troisième entrée E3, la quatrième entrée E4 et la troisième sortie S3 sont situées axialement du même côté de l'enveloppe 34 que la deuxième entrée E2 et la deuxième sortie S2. Le sens de circulation des gaz dans le deuxième échangeur-réacteur 250B est donc inversé axialement par rapport au deuxième échangeur-réacteur 50B du dispositif 24.

Le premier échangeur-réacteur 250A possède une boîte 268 de d'aller-retour des gaz située axialement du côté de la deuxième entrée E2 par rapport à la boîte 84 d'allerretour des gaz convertis.

La boîte 268 possède par exemple une forme générale torique entourant le brûleur catalytique 82 autour de l'axe central X.

Les canalisations 72 du réacteur-échangeur amont 66 sont situées radialement entre le brûleur catalytique 82 et une partie aval 286 de l'échangeur 80 du deuxième échangeur-réacteur 250B.

De même, les canalisations 74 de l'élément aval 70 sont situées radialement entre le brûleur catalytique 82 et la partie aval 286 de l'échangeur 80.

La boîte 84 reste immergée, bien que la troisième entrée E3 de gaz comburant soit en position haute.

Avantageusement, grâce à la température élevée dans le mélange d'eau et de vapeur 38, il ne se produit aucune condensation dans les canalisations 86 de l'échangeur 80. Ces canalisations peuvent donc être ascendantes, comme représenté sur la figure 4. Cet avantage existerait aussi pour les dispositifs 24 et 124 si ceux-ci étaient retournés selon l'axe central X.

Le dispositif 224 permet en outre une maintenance aisée, réalisable depuis une seule et même extrémité axiale du dispositif.

Un gain de masse est également réalisé grâce à la mise en œuvre d'une seule plaque à tubes, au lieu de deux dans les dispositifs 24 et 124.

Sur les figures 2 à 4, les dispositifs 24, 124, 224 sont représentés avec une certaine orientation par rapport à la verticale. Il va de soi que ces dispositifs peuvent être mis en œuvre dans d'autres orientations, quitte à déplacer la première entrée E1 et la première sortie S1 pour l'eau et la vapeur. En particulier, les dispositifs peuvent être inclinés à 90° ou à 180° par rapport aux positions dans lesquels ils sont représentés.

## Revendications

1. Dispositif (24 ; 124 ; 224) comprenant :
- une enceinte (34) définissant un volume intérieur (36) et configurée pour contenir un mélange d'eau et de vapeur (38),
- une première entrée (E1) apte et destinée à admettre de l'eau (18) dans le volume intérieur (36), et une première sortie (S1) apte et destinée à faire sortir de la vapeur (40) du volume intérieur (36),
- une deuxième entrée (E2) apte et destinée à recevoir un gaz de synthèse (42), et une deuxième sortie (S2) apte et destinée à faire sortir un gaz de synthèse modifié (44),
- un premier échangeur-réacteur (50A ; 150A ; 250A) situé dans le volume intérieur (36), connecté fluidiquement à la deuxième entrée (E2) et à la deuxième sortie (S2), et adapté pour réaliser une réaction du gaz à l'eau sur le gaz de synthèse (42) et obtenir le gaz de synthèse modifié (44), et pour chauffer l'eau (18) admise dans le volume intérieur (36) et produire au moins une partie de ladite vapeur (40),
- une troisième entrée (E3) apte et destinée à revoir un gaz combustible (46) distinct du gaz de synthèse (42), une quatrième entrée (E4) apte et destinée à recevoir un gaz comburant (20) comportant au moins 20% en volume d'oxygène, et une troisième sortie (S3) apte et destinée à faire sortir des gaz convertis (48), et
- un deuxième échangeur-réacteur (50B ; 250B) connecté fluidiquement à la troisième entrée (E3), à la quatrième entrée (E4) et à la troisième sortie (S3), le deuxième échangeur-réacteur (50B ; 250B) étant adapté pour réaliser une oxydation catalytique du gaz combustible (46) par le gaz comburant (20) et obtenir les gaz convertis (48),
**caractérisé en ce que** le deuxième échangeur-réacteur (50B ; 250B) est situé dans le volume intérieur (36) et est adapté pour chauffer l'eau (18) admise dans le volume intérieur (36) et produire au moins une partie de ladite vapeur (40).

2. Dispositif (24; 124; 224) selon la revendication 1, comprenant l'un ou plusieurs des éléments suivants :
- un système de chauffage (54) électrique situé dans le volume intérieur (36), et
- un mélangeur (56) configuré pour mélanger le gaz combustible (46) et le gaz comburant (20) et produire un mélange (52), le mélangeur (56) comportant la troisième entrée (E3) pour le gaz combustible (46), la quatrième entrée (E4) pour le gaz comburant (20), et une sortie (77) pour ledit mélange (52), la sortie (77) étant connectée fluidiquement au deuxième échangeur-réacteur (50B ; 250B).

3. Dispositif (24 ; 124 ; 224) selon la revendication 1 ou 2, dans lequel :
- le premier échangeur-réacteur (50A ; 150A ; 250A) comprend un réacteur-échangeur amont (66) connecté fluidiquement à la deuxième entrée (E2) pour recevoir le gaz de synthèse (42) et adapté pour réaliser au moins une partie de ladite réaction du gaz à l'eau et permettre un transfert de chaleur vers le mélange d'eau et de vapeur (38), et un élément aval (70) connecté fluidiquement à la deuxième sortie (S2) pour le gaz de synthèse modifié (44) et au réacteur-échangeur amont (66) via une boîte (68 ; 168, 268) d'aller-retour des gaz, l'élément aval (70) étant configuré pour permettre un transfert de chaleur vers le mélange d'eau et de vapeur (38) et de préférence pour réaliser une autre partie de ladite réaction du gaz à l'eau, et
- le deuxième échangeur-réacteur (50B ; 250B) comprend un réacteur (78) configuré pour réaliser ladite oxydation catalytique, et un échangeur (80) connecté fluidiquement à la troisième sortie (S3) pour les gaz convertis (48) et au réacteur (78) et configuré pour permettre un transfert de chaleur depuis les gaz convertis (48) vers le mélange d'eau et de vapeur (38).

4. Dispositif (24 ; 124 ; 224) selon la revendication 3, dans lequel le réacteur-échangeur amont (66) et l'élément aval (70) du premier échangeur-réacteur (50A ; 150A ; 250A), d'une part, et l'échangeur (80) du deuxième échangeur-réacteur (50B ; 250B), d'autre part, comprennent respectivement des pluralités de canalisations (72, 74, 88) destinées à véhiculer respectivement le gaz de synthèse (42), le gaz de synthèse modifié (44) et les gaz convertis (48).

5. Dispositif (24 ; 124 ; 224) selon la revendication 4, dans lequel :
- lesdites canalisations (72, 74) du réacteur-échangeur (66) et de l'élément aval (70) s'étendent sensiblement parallèlement à un axe central (X) du dispositif (24 ; 124 ; 224), et
- lesdites canalisations (88) de l'échangeur (80) s'enroulent autour de l'axe central (X).

6. Dispositif (24 ; 124 ; 224) selon la revendication 5, dans lequel :
- la deuxième entrée (E2) pour le gaz de synthèse (42) et le réacteur-échangeur amont (66) sont situés d'un côté d'un plan médian (P) passant par l'axe central (X), et
- la deuxième sortie (S2) pour le gaz de synthèse modifié (44) et l'élément aval (70) sont situés de l'autre côté du plan médian (P).

7. Dispositif (24 ; 124 ; 224) selon la revendication 5 ou 6, dans lequel le réacteur (78) comprend au moins un brûleur catalytique (82), et une boîte (84) d'aller-retour des gaz convertis adaptée pour recevoir les gaz convertis (48) en provenance du brûleur catalytique (82) dans un sens selon l'axe central (X) et pour les envoyer à l'échangeur (82) dans l'autre sens selon l'axe central (X).

8. Dispositif (24 ; 124 ; 224) selon la revendication 7, dans lequel :
- le premier échangeur-réacteur (50A) et le deuxième échangeur-réacteur (50B) sont situés de part et d'autre d'un plan de séparation (S) perpendiculaire à l'axe central (X), ou
- la boîte (168 ; 268) est située axialement entre la troisième sortie (S3) pour les gaz convertis (48) et la boîte (84) d'aller-retour des gaz convertis, le premier réacteur (E2) étant situé axialement par rapport à la boîte (84) d'aller-retour des gaz convertis du côté de la première entrée (E1) pour l'eau (18), ou du côté de la deuxième entrée (E2) pour le gaz de synthèse (42).

9. Installation comprenant :
- un dispositif (24 ; 124 ; 224) selon l'une quelconque des revendications 1 à 8, - un réformeur (22) adapté pour réformer un mélange d'hydrocarbures (16) en présence de vapeur et d'oxygène, le réformeur (22) étant connecté fluidiquement à la première sortie (S1) du dispositif (24 ; 124 ; 224) pour recevoir au moins une partie de ladite vapeur (14) produite par le dispositif (24 ; 124 ; 224), et adapté pour produire le gaz de synthèse (42), le réformeur (22) comprenant une sortie (94) pour le gaz de synthèse 42) connectée fluidiquement à la deuxième entrée (E2) du dispositif (24 ; 124 ; 224), et
- un purificateur (26) comprenant une entrée (96) connectée à la deuxième sortie (S2) du dispositif (24 ; 124 ; 224) pour recevoir le gaz de synthèse modifié 44), le purificateur (26) étant adapté pour séparer le gaz de synthèse modifié (44) en, d'une part, un gaz (12) comprenant au moins 90% d'hydrogène en volume et, d'autre part, ledit gaz combustible (46), le purificateur (26) comprenant une sortie (100) pour le gaz combustible (46) connectée fluidiquement à la troisième entrée (E3) du dispositif (24 ; 124 ; 224).

10. Plateforme navale (1), en particulier engin sous-marin, comprenant une installation (10) selon la revendication 9.

## Patentansprüche

1. Vorrichtung (24; 124; 224), umfassend:
- eine Umhüllung (34), die ein Innenvolumen (36) definiert und konfiguriert ist, um ein Gemisch aus Wasser und Dampf (38) zu enthalten,
- einen ersten Einlass (E1), der geeignet und dazu bestimmt ist, Wasser (18) in das Innenvolumen (36) einzulassen, und einen ersten Auslass (S1), der geeignet und dazu bestimmt ist, Dampf (40) aus dem Innenvolumen (36) austreten zu lassen,
- einen zweiten Einlass (E2), der geeignet und dazu bestimmt ist, ein Synthesegas (42) aufzunehmen, und einen zweiten Auslass (S2), der geeignet und dazu bestimmt ist, ein modifiziertes Synthesegas (44) austreten zu lassen,
- einen ersten Reaktoraustauscher (50A; 150A; 250A), der sich in dem Innenvolumen (36) befindet, fluidisch mit dem zweiten Einlass (E2) und dem zweiten Auslass (S2) verbunden ist und dazu geeignet ist, eine Reaktion des Gases mit Wasser auf dem Synthesegas (42) durchzuführen und das modifizierte Synthesegas (44) zu erlangen, und das in das Innenvolumen (36) eingelassene Wasser (18) zu erhitzen und zumindest einen Teil des Dampfs (40) zu erzeugen,
- einen dritten Einlass (E3), der geeignet und dazu bestimmt ist, ein von dem Synthesegas (42) verschiedenes Brenngas (46) aufzunehmen, einen vierten Einlass (E4), der geeignet und dazu bestimmt ist, ein Oxidationsgas (20) mit mindestens 20 Volumenprozent Sauerstoff aufzunehmen, und einen dritten Auslass (S3), der geeignet und dazu bestimmt ist, um umgewandelte Gase (48) austreten zu lassen, und
- einen zweiten Reaktoraustauscher (50B; 250B), der fluidisch mit dem dritten Einlass (E3), dem vierten Einlass (E4) und dem dritten Auslass (S3) verbunden ist, wobei der zweite Reaktoraustauscher (50B; 250B) angepasst ist, um eine katalytische Oxidation des Brenngases (46) durch das Oxidationsgas (20) durchzuführen und die umgewandelten Gase (48) zu erlangen,
**dadurch gekennzeichnet, dass** sich der zweite Reaktoraustauscher (50B; 250B) in dem Innenvolumen (36) befindet und dazu geeignet ist, das in das Innenvolumen (36) eingelassene Wasser (18) zu erhitzen und zumindest einen Teil des Dampfs (40) zu erzeugen.

2. Vorrichtung (24; 124; 224) nach Anspruch 1, umfassend eines oder mehrere der folgenden Elemente:
- ein elektrisches Heizsystem (54), das sich in dem Innenvolumen (36) befindet, und
- einen Mischer (56), der konfiguriert ist, um das Brenngas (46) und das Oxidationsgas (20) zu mischen und ein Gemisch (52) zu erzeugen, wobei der Mischer (56) den dritten Einlass (E3) für das Brenngas (46), den vierten Einlass (E4) für das Oxidationsgas (20) und einen Auslass (77) für das Gemisch (52) aufweist, wobei der Auslass (77) fluidisch mit dem zweiten Reaktoraustauscher (50B; 250B) verbunden ist.

3. Vorrichtung (24; 124; 224) nach Anspruch 1 oder 2, wobei:
- der erste Reaktoraustauscher (50A; 150A; 250A) einen stromaufwärtigen Reaktoraustauscher (66), der fluidisch mit dem zweiten Einlass (E2) verbunden ist, um das Synthesegas (42) aufzunehmen, und der dazu geeignet ist, mindestens einen Teil der Reaktion von Gas zu Wasser durchzuführen und eine Wärmeübertragung auf das Wasser-Dampf-Gemisch (38) zu ermöglichen, und ein stromabwärtiges Element (70) umfasst, das über einen Kasten (68; 168, 268) fluidisch mit dem zweiten Auslass (S2) für das modifizierte Synthesegas (44) und mit dem stromaufwärtigen Reaktoraustauscher (66) für die Gasrückführung, wobei das stromabwärtige Element (70) konfiguriert ist, um eine Wärmeübertragung auf das Wasser-Dampf-Gemisch (38) zu ermöglichen und vorzugsweise einen weiteren Teil der Reaktion von Gas zu Wasser durchzuführen, und
- der zweite Reaktoraustauscher (50B; 250B) einen Reaktor (78) umfasst, der konfiguriert ist, um die katalytische Oxidation durchzuführen, und einen Austauscher (80), der fluidisch mit dem dritten Auslass (S3) für umgewandelte Gase (48) und dem Reaktor (78) verbunden ist und konfiguriert ist, um eine Wärmeübertragung von den umgewandelten Gasen (48) zu dem Wasser-Dampf-Gemisch (38) zu ermöglichen.

4. Vorrichtung (24; 124; 224) nach Anspruch 3, wobei der stromaufwärtige Reaktoraustauscher (66) und das stromabwärtige Element (70) des ersten Reaktoraustauschers (50A; 150A; 250A) einerseits und der Austauscher (80) des zweiten Reaktoraustauschers (50B; 250B) andererseits jeweils eine Vielzahl von Leitungen (72, 74, 88) umfassen, die dazu bestimmt sind, jeweils das Synthesegas (42), das modifizierte Synthesegas (44) und die umgewandelten Gase (48) zu transportieren.

5. Vorrichtung (24; 124; 224) nach Anspruch 4, wobei:
- die Leitungen (72, 74) des Reaktoraustauschers (66) und des stromabwärtigen Elements (70) sich im Wesentlichen parallel zu einer Mittelachse (X) der Vorrichtung (24; 124; 224) erstrecken, und
- die Leitungen (88) des Austauschers (80) sich um die Mittelachse (X) winden.

6. Vorrichtung (24; 124; 224) nach Anspruch 5, wobei:
- der zweite Einlass (E2) für das Synthesegas (42) und der stromaufwärtige Reaktoraustauscher (66) sich auf einer Seite einer Mittelebene (P) befinden, die durch die Mittelachse (X) verläuft, und
- der zweite Auslass (S2) für das modifizierte Synthesegas (44) und das stromabwärtige Element (70) sich auf der anderen Seite der Mittelebene (P) befinden.

7. Vorrichtung (24; 124; 224) nach Anspruch 5 oder 6, wobei der Reaktor (78) mindestens einen katalytischen Brenner (82) und einen Kasten (84) zum Rückführen von umgewandelten Gasen umfasst, der angepasst ist, um die umgewandelten Gase (48) von dem katalytischen Brenner (82) in eine Richtung entlang der Mittelachse (X) aufzunehmen und sie in der anderen Richtung entlang der Mittelachse (X) zu dem Austauscher (82) zu leiten.

8. Vorrichtung (24; 124; 224) nach Anspruch 7, wobei:
- der erste Reaktoraustauscher (50A) und der zweite Reaktoraustauscher (50B) sich auf beiden Seiten einer Trennebene (S) senkrecht zu der Mittelachse (X) befinden, oder
- der Kasten (168; 268) sich axial zwischen dem dritten Auslass (S3) für die umgewandelten Gase (48) und dem Kasten (84) zum Rückführen von umgewandelten Gasen befindet, wobei sich der erste Reaktor (E2) axial in Bezug auf den Kasten (84) zum Rückführen von umgewandelten Gasen auf der Seite des ersten Einlasses (E1) für das Wasser (18) oder auf der Seite des zweiten Einlasses (E2) für das Synthesegas (42) befindet.

9. Anlage, umfassend:
- eine Vorrichtung (24; 124; 224) nach einem der Ansprüche 1 bis 8, - einen Reformer (22), der dazu geeignet ist, ein Kohlenwasserstoffgemisch (16) in Anwesenheit von Dampf und Sauerstoff zu reformieren, wobei der Reformer (22) fluidisch mit dem ersten Auslass (S1) der Vorrichtung (24; 124; 224) verbunden ist, um zumindest einen Teil des von der Vorrichtung (24; 124; 224) erzeugten Dampfs (14) aufzunehmen, und dazu geeignet ist, das Synthesegas (42) zu erzeugen, der Reformer (22) umfassend einen Auslass (94) für das Synthesegas 42), der fluidisch mit dem zweiten Einlass (E2) der Vorrichtung (24; 124; 224) verbunden ist, und
- einen Aufreiniger (26), umfassend einen Einlass (96), der fluidisch mit dem zweiten Auslass (S2) der Vorrichtung (24; 124; 224) zum Aufnehmen des modifizierten Synthesegases (44) verbunden ist, wobei der Aufreiniger (26) dazu geeignet ist, das modifizierte Synthesegas (44) einerseits in ein Gas (12) mit mindestens 90 Volumenprozent Wasserstoff und andererseits in das genannte Brenngas (46) zu trennen, der Aufreiniger (26) umfassend einen Auslass (100) für das Brenngas (46), der fluidisch mit dem dritten Einlass (E3) der Vorrichtung (24; 124; 224) verbunden ist.

10. Schiffsplattform (1), insbesondere Unterwassermaschine, umfassend eine Anlage (10) nach Anspruch 9.

## Claims

1. A device (24; 124; 224) comprising:
- an enclosure (34) defining an interior volume (36) and configured to contain a mixture of water and steam (38),
- a first inlet (E1) suitable and intended for admitting water (18) into the interior volume (36), and a first outlet (S1) suitable and intended for discharging steam (40) from the interior volume (36),
- a second inlet (E2) suitable and intended for receiving a syngas (42), and a second outlet (S2) suitable and intended for delivering a modified syngas (44),
- a first exchanger-reactor (50A; 150A; 250A) located in the interior volume (36), fluidly connected to the second inlet (E2) and to the second outlet (S2), and suitable for carrying out a water-gas shift reaction of the syngas (42) and obtaining the modified syngas (44), and for heating the water (18) admitted into the interior volume (36) and producing at least part of said steam (40),
- a third inlet (E3) suitable and intended for receiving a combustible gas (46) distinct from the syngas (42), a fourth inlet (E4) suitable and intended for receiving an oxidizing gas (20) including at least 20% oxygen by volume, and a third outlet (S3) suitable and intended for discharging converted gases (48), and
- a second exchanger-reactor (50B; 250B) fluidly connected to the third inlet (E3), to the fourth inlet (E4) and to the third outlet (S3), the second exchanger-reactor (50B; 250B) being suitable for carrying out a catalytic oxidation of the combustible gas (46) by the oxidizing gas (20) and obtaining the converted gases (48),
**characterized in that** the second exchanger-reactor (50B; 250B) is located in the interior volume (36) and is suitable for heating the water (18) admitted into the interior volume (36) and producing at least part of said steam (40).

2. The device (24; 124; 224) according to claim 1, comprising one or more of the following:
- an electrical heating system (54) located within the interior volume (36), and
- a mixer (56) configured for mixing the combustible gas (46) and the oxidizing gas (20) and producing a mixture (52), the mixer (56) comprising the third inlet (E3) for the combustible gas (46), the fourth inlet (E4) for the oxidizing gas (20), and an outlet (77) for said mixture (52), the outlet (77) being fluidly connected to the second exchanger-reactor (50B; 250B).

3. The device (24; 124; 224) according to claim 1 or 2, wherein:
- the first exchanger-reactor (50A; 150A; 250A) comprises an upstream reactor-exchanger (66) fluidly connected to the second inlet (E2) for receiving the syngas (42) and suitable for carrying out at least a portion of said water-gas shift reaction and allowing a heat transfer to the mixture of water and steam (38), and a downstream element (70) fluidly connected to the second outlet (S2) for the modified syngas (44) and to the upstream reactor-exchanger (66) via a gas return canister (68; 168, 268), the downstream element (70) being configured to enable a transfer of heat to the mixture (38) of water and steam and preferably to carry out another portion of said water-gas shift reaction, and
- the second exchanger-reactor (50B; 250B) comprises a reactor (78) configured to perform said catalytic oxidation, and an exchanger (80) fluidly connected to the third outlet (S3) for the converted gases (48) and to the reactor (78) and configured to enable a transfer of heat from the converted gases (48) to the mixture of water and steam (38).

4. The device (24; 124; 224) according to claim 3, wherein the upstream reactor-exchanger (66) and the downstream element (70) of the first exchanger-reactor (50A; 150A; 250A), on the one hand, and the exchanger (80) of the second exchanger-reactor (50B; 250B), on the other hand, respectively comprise pluralities of channels (72, 74, 88) intended to convey the syngas (42), the modified syngas (44), and the converted gases (48) respectively.

5. The device (24; 124; 224) according to claim 4, wherein:
- said channels (72, 74) of the reactor-exchanger (66) and the downstream element (70) extend substantially parallel to a central axis (X) of the device (24; 124; 224), and
- said channels (88) of the exchanger (80) wrap around the central axis (X).

6. The device (24; 124; 224) according to claim 5, wherein:
- the second inlet (E2) for the syngas (42) and the upstream reactor-exchanger (66) are located on one side of a median plane (P) passing through the central axis (X), and
- the second outlet (S2) for the modified syngas (44) and the downstream element (70) are located on the other side of the median plane (P).

7. The device (24; 124; 224) according to claim 5 or 6, wherein the reactor (78) comprises at least one catalytic burner (82), and a converted gas return canister (84) adapted to receive the converted gas (48) from the catalytic burner (82) in one direction along the central axis (X) and to send them to the exchanger (82) in the other direction along the central axis (X).

8. The device (24; 124; 224) according to claim 7, wherein:
- the first exchanger-reactor (50A) and the second exchanger-reactor (50B) are located on either side of a separation plane (S) perpendicular to the central axis (X), or
- the canister (168; 268) is located axially between the third outlet (S3) for the converted gases (48) and the return canister (84) for the converted gases, the first reactor (E2) being located axially with respect to the return canister (84) for the converted gases on the side of the first inlet (E1) for the water (18), or on the side of the second inlet (E2) for the syngas (42)

9. A system comprising:
- a device (24; 124; 224) according to any one of claims 1 to 8, - a reformer (22) suitable for reforming a hydrocarbon mixture (16) in the presence of steam and oxygen, the reformer (22) being fluidly connected to the first outlet (S1) of the device (24; 124; 224) to receive at least a portion of said steam (14) produced by the device (24; 124; 224), and suitable for producing the syngas (42), the reformer (22) comprising an outlet (94) for the syngas (42) fluidly connected to the second inlet (E2) of the device (24; 124; 224), and
- a purifier (26) comprising an inlet (96) connected to the second outlet (S2) of the device (24; 124; 224) for receiving the modified syngas 44), the purifier (26) being suitable for separating the modified syngas (44) into, on the one hand, a gas (12) comprising at least 90% hydrogen by volume and, on the other hand, said combustible gas (46), the purifier (26) comprising an outlet (100) for the combustible gas (46) fluidly connected to the third inlet (E3) of the device (24;124;224).

10. A naval platform (1), in particular a submarine, comprising a system (10) according to claim 9.
